# EUROPÄISCHE PATENTSCHRIFT

(11) **EP 0 458 084 B1**
(45) Veröffentlichungstag und Bekanntmachung des Hinweises auf die Patenterteilung: **07.12.1994**
(21) Anmeldenummer: 91106763.5
(22) Anmeldetag: 26.04.1991
(51) Int. Cl.: B01D 46/06, B01D 46/52, B01D 46/02

(54) **Filterelement**
Filter element
Elément filtrant

(30) Priorität: 16.05.1990 DE 4015712
(43) Veröffentlichungstag der Anmeldung: 27.11.1991
(73) Patentinhaber: Rapp, Peter, D-74629 Pfedelbach (DE)
(72) Erfinder: Rapp, Peter, W-7114 Pfedelbach (DE); Schmid, Manfred, W-7101 Eberstadt (DE)
(74) Vertreter: Müller, Hans, Dipl.-Ing.

(56) Entgegenhaltungen:
- EP-A- 0 250 801
- EP-A- 0 351 850
- DE-A- 2 617 356

## Beschreibung

Die Erfindung betrifft ein automatisch abzureinigendes Filterelement für ein Filtergehäuse, in dem mehrere derartige Filterelemente auswechselbar zusammen vorhanden sind. Jedes dieser Filterelemente weist ein Filtermedium aus zwei balgartig gefalteten Materialbahnen auf.

Derartige Filterelemente werden beispielsweise bei der Feinstaubabscheidung aus Gas- bzw. Luftströmen eingesetzt. Die in dem Gas bzw. in der Luft vorhandenen abzuscheidenden Partikel setzen sich dabei an der Oberfläche des Filtermediums ab. Damit der Filter nicht unwirksam wird, wird er von Zeit zu Zeit gereinigt, was beispielsweise durch Rütteln oder durch Gegenblasen von Druckluft erfolgt.

### STAND DER TECHNIK

Ein derartiges Filterelement ist aus der EP-A-0 351 850 bekannt. Zwischen seinen beiden Materialbahnen sind Stützkörper zum gegenseitigen Abstützen dieser beiden Bahnen vorhanden. Die zueinander gerichteten Bahnbereiche sind entweder unmittelbar oder mittelbar über den Stützkörper fest miteinander verbunden. Bei diesen Filterelementen wird die balgartige Form der Materialbahnen sowohl im Abluftbetrieb als auch beim Reinigen derselben aufrechterhalten, da die beiden Bahnen zug- und druckfest miteinander verbunden sind und damit einen fest vorgegebenen gegenseitigen konstanten Abstand voneinander aufrechterhalten. Diese Filterelemente haben sich als technisch einwandfrei herausgestellt. Nicht unerheblich ist allerdings der Aufwand, der zur zug- und druckfesten Verbindung der beiden Materialbahnen aufgewendet werden muß. So werden Spezialmaschinen zum Verkleben oder Verschweißen der beiden Bahnen erforderlich, die sich recht erheblich auf die Herstellkosten für derartige Filterelemente auswirken. Außerdem wird bei diesem Filterelement durch den für die Kleb- bzw. Schweißverbindung erforderlichen Oberflächenbedarf die wirksame Filterfläche verkleinert.

Aus der EP-A-0 250 801 ist ein vergleichbares Filterelement bekannt, dessen Faltenlängskanten seiner gegenüberliegenden gefalteten Filterbahnen nicht fest miteinander verbunden sind, sondern lose, sich gegenseitig abstützend, aneinander liegen. Die Faltenlängskanten der beiden Filterbahnen müssen dadurch gegenseitig genau gegenüberliegend ausgerichtet sein. Dies erfordert eine präzise gleiche Faltung der beiden Filterbahnen und ihre exakte gegenseitige Ausrichtung im Filterelement.

Aus der DE-OS 963 829 sind Filterelemente bekannt, bei denen die Materialbahnen im Anström- und Abströmbereich nicht miteinander verbunden sind. Diese Materialbahnen weisen eine primäre balgartig gefaltete Bahn auf, die mit sekundären Harmonikafalten nochmals gefaltet wird. Durch ein derartiges Falten der Bahnen werden viereckige Wabenzellen gebildet. Diese Wabenzellen sollen eine derartige Steifigkeit aufweisen, daß auf separate Stützelemente oder auf ein gegenseitiges Verbinden der beiden Bahnen verzichtet werden kann. Der Vorteil, die Bahnen nicht miteinander verbinden zu müssen, wird durch den Nachteil der recht aufwendigen Faltung eingetauscht. So gestaltet sich das Aufbringen der Prägung für die ziehharmonikaartige Faltung und das anschließende nochmalige Zusammenfalten sowie das darauf erfolgende Einbringen dieser gefalteten Konstruktion in einen Endrahmen als insgesamt recht aufwendig.

Um diese recht aufwendige Falterei zu vermeiden sind zahlreiche Filterelemente bekannt, bei der die zueinander gerichteten Bahnbereiche fest miteinander verbunden sind (US-PS 3.410.062, GB-PS 823 648, DE-OS 33 04 350).

Balgartig gefaltete Materialbahnen sind im übrigen bei sogenannten Speicherfiltern ganz allgemein bekannt (DE-OS 38 02 190, DE-OS 1 607 707, US-PS 3.458.979, FR-PS 2 324 342). Unter diesen einer anderen Gattung angehörenden Filtern werden solche Filter verstanden, für die keine automatische Abreinigung vorgesehen werden kann und die daher nach einiger Zeit wegen Unbrauchbarkeit gegen neue Filter ausgetauscht werden müssen. Bei diesen Filtern setzen sich die abzuscheidenden Partikel im Inneren dieser Filter ab. Durch Gegenblasen von Druckluft oder durch mechanisches Rütteln der Filter lassen sich diese Partikel nicht wieder aus dem Filter entfernen. Da diese Filter im Gegensatz zu automatisch abzureinigenden Filtern während des Filterbetriebs nur sehr geringen Druckdifferenzen zwischen der Anström- und Abströmfilteroberfläche ausgesetzt sind, lassen sie sich problemlos in Form von balgartig geformten Zellen ausbilden; der bei einer automatischen Abreinigung vorhandenen wesentlich größeren Belastung können sie aber nicht ausgesetzt werden.

Es sind ferner Filterelemente bekannt, deren Materialbahnen ebenflächig ausgebildet sind. Jeweils zwei dieser Materialbahnen werden zu einem stirnseitig offenen Filterelement zusammengesetzt. Mehrere dieser Filterelemente sind dann regelmäßig austauschbar in einem Filtergehäuse untergebracht. Im Reinigungsbetrieb strömt die zu reinigende Luft von außen gegen die betreffende Materialbahnoberfläche, so daß sich dort die Schmutzpartikel und dergleichen Verunreinigungen ablagern. Nach Durchströmen der Materialbahn strömt die gereinigte Luft dann stirnseitig aus dem einseitig offenen Filterelement heraus. Zum Abreinigen wird Druckluft in die einseitig offene Kammer zwischen den beiden Materialbahnen so stark eingeblasen, daß die Schmutzpartikel außen von den Materialbahnen abfallen. Die wirksame Filterfläche entspricht bei diesen Filterelementen der Ansichtsfläche ihrer Materialbahnen.

### DARSTELLUNG DER ERFINDUNG

Der Erfindung liegt die Aufgabe zugrunde, unter Vermeidung der aus dem Stand der Technik bekannten Nachteile ein automatisch abzureinigendes Filterelement der eingangs genannten Art anzugeben, das einen möglichst großen Nettoquerschnitt aufweist und das auf wirtschaftlich insgesamt einfache Weise hergestellt und betrieben werden kann.

Diese Erfindung ist durch die Merkmale des Hauptanspruchs gegeben. Das eingangs genannte Filterelement zeichnet sich dementsprechend dadurch aus, daß seine beiden Materialbahnen mit ihren Längsknickkanten einen derartigen Abstand voneinander aufweisen, daß sie nicht aneinander anlehnbar sind. Die Erfindung basiert damit auf der Erkenntnis, daß keine gegenseitige Abstützung der Filterlängskanten vorgesehen zu werden braucht, weder in Form einer gegenseitigen Verbindung oder gegenseitigen losen Abstützung noch durch einen Stützkörper. Dies läßt sich beispielsweise einfach verwirklichen, indem man entweder so verformungssteife Materialbahnen verwendet oder entsprechend nachgiebige Materialbahnen in einem solchen gegenseitigen Abstand voneinander anordnet, daß sich die beiden Bahnen im Reinigungsbetrieb nicht aneinanderlegen können und die wirksame Filterfläche dadurch nicht verkleinert werden kann. Falls die beiden Materialbahnen oder benachbarte Filterelemente demgegenüber enger beieinander angeordnet werden sollen, kann dies entsprechend den Merkmalen von Patentanspruch 2 dadurch geschehen, daß lose zwischen den Materialbahnen Stützkörper vorgesehen werden, die lediglich in Teilbereichen der Materialbahnen vorhanden sind. Je nach Größe des zum Abreinigen verwendeten Luftdruckes können solche Stützelemente auch von außen lose an den Materialbahnen angeordnet werden.

Um keine Druckunterschiede beidseitig des inneren Stützkörpers auftreten zu lassen, kann der innere Stützkörper luftdurchlässig ausgebildet werden. Darüber hinaus braucht der innere Stützkörper nicht in dem Filterelement befestigt zu werden, es muß nur sichergestellt werden, daß der innere Stützkörper nicht aus dem Filterelement herausfallen kann. Sofern das Filterelement in einem Gehäuse von oben eingehängt oder horizontal eingeschoben vorhanden ist, kann der innere Stützkörper ebenfalls von oben oder von der Seite her lose in dem Filterelement vorhanden sein. Sollte ein Filterelement ausgetauscht werden müssen, könnte dann der innere Stützkörper auch bei dem neuen Filterelement benutzt werden.

Jeder äußere Stützkörper kann losgelöst von dem jeweils anderen äußeren Stützkörper beispielsweise in Form eines Gitters oder eines räumlichen Gebildes vorhanden sein. Diese äußeren Stützkörper können an dem Filterelement befestigt sein; es ist nach einem ganz wesentlichen Merkmal der Erfindung aber auch möglich, diese äußeren Stützkörper beispielsweise an dem Gehäuse zu befestigen. Die äußeren Stützkörper können damit bleibend an dem Gehäuse vorhanden sein; beim Auswechseln von verbrauchten Filterelementen bräuchten dann nur die Filterelemente ohne die äußeren Stützkörper aus dem Gehäuse herausgenommen zu werden.

Nach einem anderen Merkmal der Erfindung können die beiden äußeren Stützkörper auch miteinander verbunden ausgebildet sein. Dies ist durch etwa U-förmige, die Gestalt von Nadeln aufweisende Stützkörper möglich.

Nach einem weiteren Merkmal der Erfindung können die Mittelebenen beider Materialbahnen eines Filterelementes auch winklig zueinander derart ausgerichtet sein, daß die Reingas-Austrittsseite einen gegenüber dem übrigen Reingaskanal niedrigeren Widerstand aufweist. Der innere Stützkörper weist dann ebenfalls eine zur Reingas-Austrittsöffnung hin sich konisch erweiternde Gestalt auf.

Weitere Ausgestaltungen und Vorteile der Erfindung sind den in den Ansprüchen weiterhin aufgeführten Merkmalen sowie den nachstehenden Ausführungsbeispielen zu entnehmen.

### KURZE BESCHREIBUNG DER ZEICHNUNG

Die Erfindung wird im folgenden anhand der in der Zeichnung dargestellten Ausführungsbeispiele näher beschrieben und erläutert. Es zeigen:
- Fig. 1: eine perspektivische Ansicht eines Gehäuses mit mehreren Filterelementen in einer ersten Ausführungsform nach der Erfindung,
- Fig. 2: eine Draufsicht eines Filterelements in einer zweiten Ausführungsform,
- Fig. 3: eine perspektivische Teilansicht des Filterelementes gemäß Fig, 2,
- Fig. 4: eine perspektivische Teilansicht durch ein Filterelement in einer dritten Ausführungsform,
- Fig. 5: eine perspektivische Darstellung eines weiteren Filterelements mit teilweise herausgezogenem inneren Stützkörper.

### WEGE ZUR AUSFÜHRUNG DER ERFINDUNG

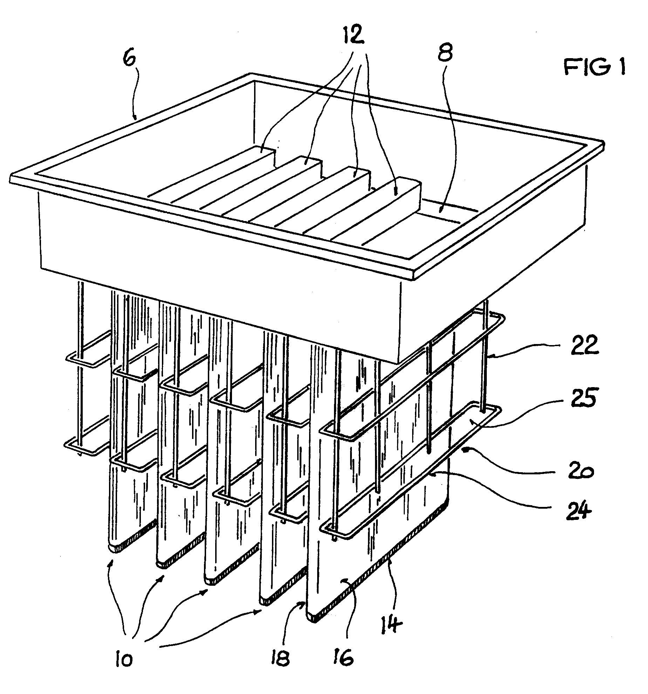

In Fig. 1 ist ein Gehäuse 6 dargestellt, in dem auf einer unteren Abbiegung 8 mehrere Filterelemente 10 mit ihrem oberen Kunststoffkörper 12 aufliegen. Jedes Filterelement besitzt neben dem oberen Kunststoffkörper 12 noch einen unteren Kunststoffkörper 14, in die die gegenüberliegenden jeweiligen beiden Längsränder zweier textiler Bahnen 16, 18 eingeschweißt vorhanden sind.

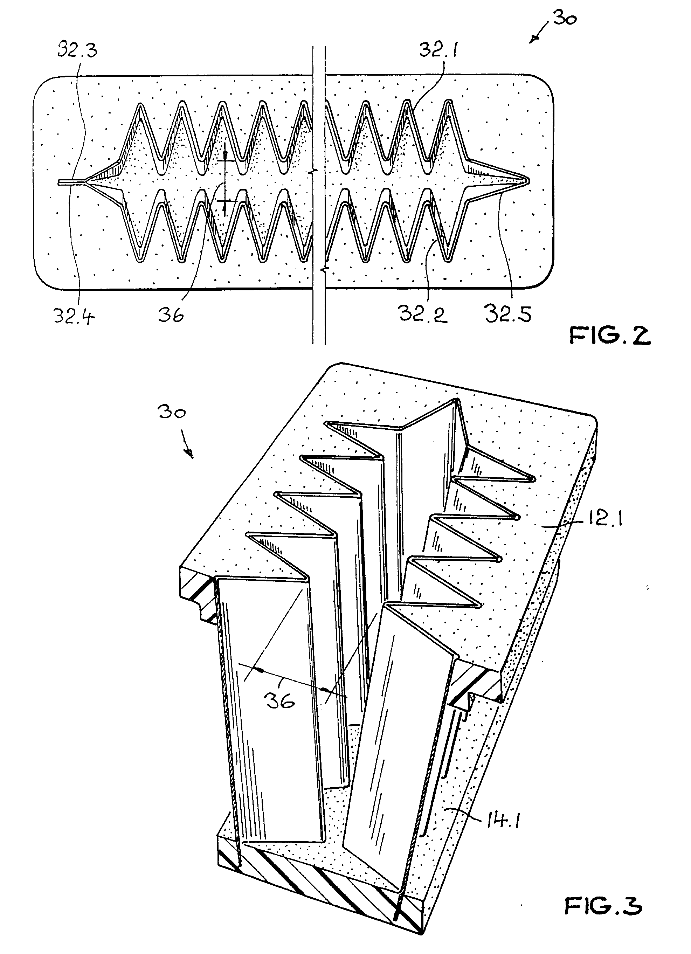

Die beiden textilen Bahnen 16, 18 bilden das Filtermedium eines Filterelementes 10 und sind balgartig etwa in der aus den Figuren 2, 3, 4 und 5 ersichtlichen Art gefaltet.

Auf der Außenseite jeder Bahn 16, 18 ist ein bei der Darstellung gemäß Fig. 1 gitterartiger Korb 20 vorhanden, der an dem Gehäuse 6 so befestigt ist, daß er zwischen benachbarten Filterelementen 10 vorhanden ist. Der gitterartige Korb 20 liegt dabei eng an der Außenseite der jeweiligen Bahn 16, 18 an.

Der gitterartige Korb 20 stellt einen äußeren Stützkörper für die Bahnen 16, 18 dar, so daß sich dieselben nicht nach außen ausbeulen können, wenn sie abgereinigt werden und zu diesem Zweck Druckluft von oben in das Gehäuse 6 und damit in das Innere der Filterelemente 10 stoßweise hineingeblasen wird.

Der gitterartige Korb 20 besteht in Fig. 1 aus vertikalen Stäben 22 und schlaufenartigen horizontal ausgerichteten Stabformen 24, die fest miteinander verbunden sind. Die Stäbe 22 und die Stabformen 24 können beispielsweise aus Flachmaterial bestehen. Die schlaufenartige Ausbildung der Stabform 24 mit ihrer mittigen Öffnung 25 verhindert, daß sich beim Abreinigen der Filterelemente 10 Staubpartikel und dergleichen auf den horizontalen Stäben des gitterartigen Korbes festsetzen und sich damit die äußere Filterfläche mit der Zeit zusetzen könnte. Dadurch können die Verunreinigungen nach unten aus dem Bereich der Filterelemente durch die Öffnung 25 hindurchfallen.

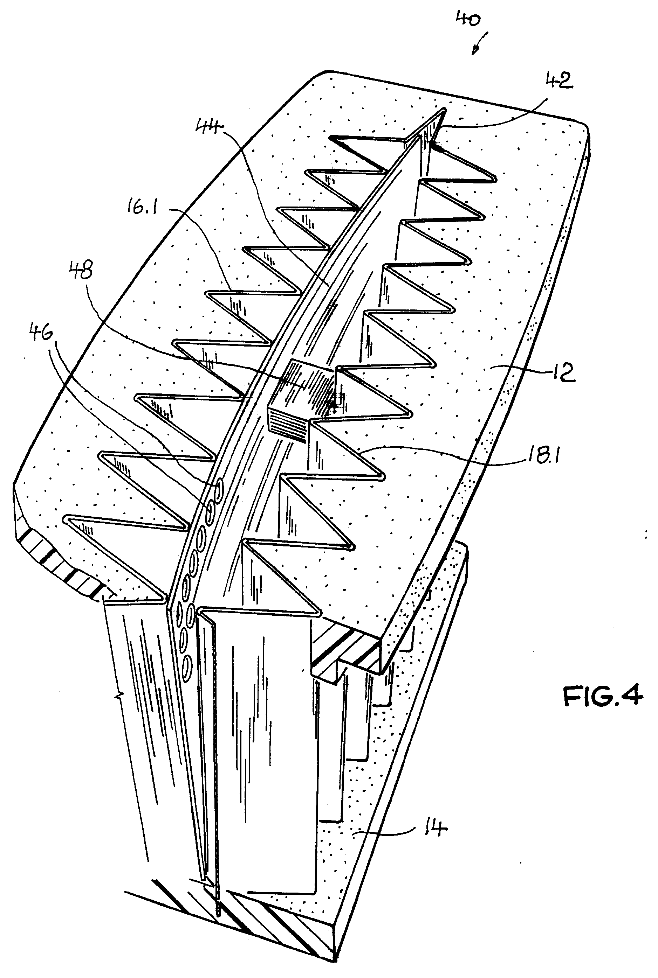

Während bei dem in Fig. 1 dargestellten Filterelement 10 dessen beide Materialbahnen 16, 18 parallel zueinander ausgerichtet sind, sind bei dem Filterelement 30 (Fig. 2, 3) die gegenüberliegenden Materialbahnen 32.1 und 32.2 nach oben hin V-förmig geneigt zueinander ausgerichtet. Der innere Zwischenraum 34 zwischen den beiden gegenüberliegenden Bereichen der Materialbahn 32 verbreitert sich vom Bereich des unteren Kunststoffkörpers 14.1 zum oberen Kunststoffkörper 12.1 kontinuierlich. Die über die Oberfläche der Materialbahnen 32.1 und 32.2 in den inneren Zwischenraum 34 einströmende Luftmenge kann durch die auf der Oberseite des Filterelements 30 vorhandene vergrößerte Öffnung (Spreizung 36) problemlos aus dem Filterelement 10 nach oben hin entweichen. Dadurch kann der Strömungswiderstand während der Reinigungsphase des Filterelements durch die nach oben hin sich verbreiternde Öffnung problemlos verringert werden. Die nach oben hin sich V-förmig erweiternden Filterelemente haben auch den weiteren Vorteil, daß außen an ihren Materialbahnen anhaftende Partikel beim Abreinigen des Filterelements von der Oberfläche nach unten frei wegfallen und dabei nicht so leicht wieder auf die Filteroberfläche auftreffen würden.

Die beiden Materialbahnen 32.1 und 32.2 sind aus einer einzigen Materialbahn 32 durch balgartige Faltung hergestellt. Die freien seitlichen Endbereiche 32.3 und 32.4 dieser Materialbahn sind miteinander verklebt bzw. verschweißt. An der gegenüberliegenden Längsseite sind die beiden Bahnen 32.1 und 32.2 über eine Faltung 32.5 einstückig miteinander verbunden. Über die Breite dieser Falte 32.5 läßt sich der gegenseitige Abstand 36 zwischen den beiden Bahnen 32.1 und 32.2 und damit deren gegenseitige Spreizung festlegen.

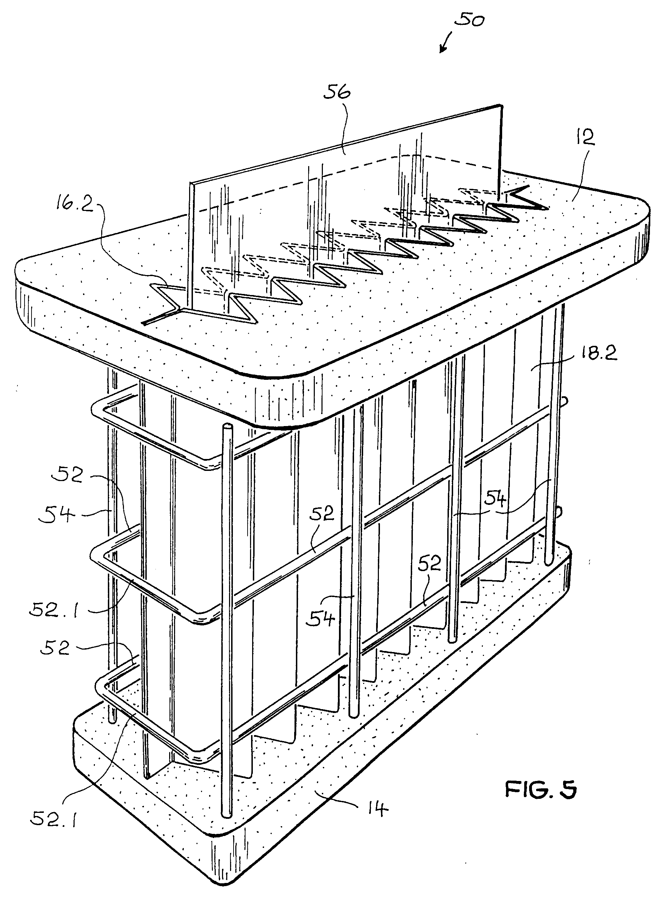

Das in Fig. 2 und 3 dargestellte Filterelement 30 kann mit äußeren Stützkörpern etwa den in Fig. 1 oder den in der noch weiter unten näher beschriebenen Fig. 5 ausgestattet werden. Es ist allerdings auch möglich, zwischen den beiden Bahnen 32.1 und 32.2 innere Stützkörper vorzusehen, sowie es bei den Filterelementen gemäß Fig. 4 und 5 vorgesehen ist.

Das in Fig. 4 dargestellte Filterelement 40 entspricht im wesentlichen dem in Fig. 1 dargestellten Filterelement 10. Zwischen dem unteren Kunststoffkörper 14 und dem oberen Kunststoffkörper 12 sind zwei Materialbahnen 16.1 und 18.1 balgartig gefaltet vorhanden. Die beiden Materialbahnen 16.1 und 18.1 sind über eine gemeinsame Faltung 42 einstückig miteinander verbunden. Die beiden der Faltung 42 gegenüberliegenden freien Ränder der beiden Bahnen 16.1 und 18.1 sind in entsprechender Weise wie in Fig. 2 dargestellt, miteinander luftdicht verschweißt bzw. verklebt.

Im Gegensatz zu Fig. 1 ist bei dem Filterelement 40 zwischen den beiden Bahnen 16.1 und 18.1 ein innerer Stützkörper 44 vorhanden. Dieser innere Stützkörper 44 besitzt Durchbrüche 46, von denen lediglich einige zeichnerisch dargestellt sind. Aufgrund dieser Durchbrüche 46 ist der innere Stützkörper 44 in Querrichtung luftdurchlässig. Dieser innere Stützkörper 44 ist lose in das Filterelement 40 eingestellt, so daß er aus demselben auch problemlos wieder herausgenommen werden kann. Bei Austausch des Filterelementes 40 - etwa wenn es beschädigt sein sollte - könnte dann der vorhandene Stützkörper 44 auch bei dem neuen Filterelement (40) verwendet werden. Dadurch lassen sich die im Zusammenhang mit dem Austauschen anfallenden Kosten um die Kosten des inneren Stützkörpers 44 verringern.

Zwischen dem inneren Stützkörper 44 und der einen Materialbahn 18.1 ist ein blockartiger Abstandshalter 48 vorhanden. Damit wird der obere Bereich der beiden Bahnen 16.1 und 18.1 voneinander abgespreizt, so daß auch bei dem Filterelement 40 ein dem Filterelement 30 vergleichbarer Effekt eintritt, daß nämlich die durch die Bahnen 16.1 und 18.1 hindurchströmende Luft nach oben hin leicht aus dem Filterelement herausströmen kann. Der plattenförmige innere Stützkörper 44 und der aus elastisch verformbarem Kunststoff hergestellte obere Kunststoffkörper 12 machen die durch den Abstandshalter 48 bewirkte Verformung zerstörungsfrei mit. Zum Herstellen des oberen Kunststoffkörpers 12 braucht somit gegenüber seiner Ausführungsform gemäß Fig. 1 keine besondere Gießform hergestellt zu werden.

Bei dem in Fig. 5 dargestellten Filterelement 50 handelt es sich um ein Filterelement, das dem Filterelement 10 der Fig. 1 weitgehend entspricht. In Fig. 5 sind allerdings andere äußere Stützkörper vorhanden. Dieser äußere Stützkörper besteht aus mehreren horizontalen Stäben 52 und äußeren vertikalen Stäben 54. Die Stäbe 52 und 54, die einen beliebigen Querschnitt haben können, sind fest miteinander verbunden. In ihrer Stärke und Ausbildung sowie geometrischen Anordnung sind sie so ausgebildet, daß die Bahnen 16.2 und 18.2 des Filterelements 50 nicht nach außen ausknicken können.

Die auf der Außenseite der beiden Bahnen 16.2 und 18.2 vorhandenen horizontalen Stäbe 52 sind miteinander durch Stege 52.1 miteinander verbunden, so daß der äußere Stützkörper eine U-förmige Gesamtgestalt aufweist. Der äußere Stützkörper könnte somit etwa in Fig. 5 nach links aus dem Filterelement 50 herausgezogen werden. Damit dieser äußere Stützkörper einen gewissen festen Halt an dem Filterelement 50 bekommt, ragen seine vertikalen Stäbe 54 von oben etwas in den unteren Kunststoffkörper 14 hinein. Dadurch, daß diese vertikalen Stäbe 52 von der Unterseite des oberen Kunststoffkörpers 12 einen gewissen Abstand aufweisen, kann der gesamte äußere Stützkörper 54 nach oben hin angehoben und dann seitlich aus dem Element 50 herausbewegt werden. In umgekehrter Reihenfolge kann der Stützkörper seitlich in das Filterelement 50 hineingeschoben und dann nach unten in den unteren Kunststoffkörper 14 etwas hineinversenkt werden.

## Patentansprüche

1. Automatisch abzureinigendes Filterelement für ein Filtergehäuse, in dem das in der Reinigungsphase von außen nach innen durchströmbare Filterelement mit mehreren anderen zusammen auswechselbar vorhanden ist, wobei
- das Filterelement ein aus balgartig gefalteten Materialbahnen bestehendes Filtermedium aufweist,
- zwei balgartig gefaltete Materialbahnen nebeneinanderliegend derart vorhanden sind, daß zwischen ihnen, quer zur Längserstreckung der Materialbahnen, Zwischenräume ausgebildet sind,
- diese beiden Materialbahnen fest in dem oberen und unteren Kunststoffkörper des Filterelements angeordnet sind und
- die seitlichen Längskanten der beiden Materialbahnen fest miteinander verbunden sind,
**dadurch gekennzeichnet,** daß
- seine beiden Materialbahnen (16, 18, 32) mit ihren Längsknickkanten einen derartigen Abstand voneinander aufweisen, daß sie auch in der Reinigungsphase nicht aneinander anlehnbar sind.

2. Filterelement nach Anspruch 1,
**dadurch gekennzeichnet,** daß
- zwischen den beiden Materialbahnen (16, 28, 32) beide gegenseitig abstützende innere Stützkörper (44, 48) vorhanden sind,
- die beiden Materialbahnen (16, 18) lose an den inneren Stützkörpern (44, 48) anliegen,
- die inneren Stützkörper ein plattenförmiger innerer Stützkörper (44) und ein blockartiger Abstandshalter (48) sind, wobei zwischen dem inneren Stützkörper (44) und dem oberen Bereich der einen Materialbahn (18.1) der blockartige Abstandshalter angeordnet ist.

3. Filterelement nach Anspruch 1 oder 2,
**dadurch gekennzeichnet,** daß
- auf jeder Außenseite der beiden Materialbahnen (16, 18) ein die Materialbahn von außen lose abstützender äußerer Stützkörper (22, 24, 52, 54) vorhanden ist.

4. Filterelement nach Anspruch 2,
**dadurch gekennzeichnet,** daß
die inneren Stützkörper (44) luftdurchlässig sind.

5. Filterelement nach Anspruch 3,
**dadurch gekennzeichnet,** daß
die äußeren Stützkörper (22, 24, 52, 54) , die an einer Materialbahn (16, 18) außen vorhanden sind, in Form eines Gitters ausgebildet sind.

6. Filterelement nach Anspruch 5,
**dadurch gekennzeichnet,** daß das Gitter (52, 54) in einem Kunststoffkörper (14) lösbar befestigt ist.

7. Filterelement nach Anspruch 3,
**dadurch gekennzeichnet,** daß
die äußeren Stützkörper (22, 24) beider Materialbahnen (16, 18) als korbartiges, zusammenhängendes Gebilde (20) ausgebildet sind.

8. Filterelement nach Anspruch 3,
**dadurch gekennzeichnet,** daß
die äußeren Stützkörper (52, 54) beider Materialbahnen als beide Bahnen etwa U-förmig umfassende Nadeln ausgebildet sind.

9. Filterelement nach Anspruch 3,
**dadurch gekennzeichnet,** daß
die äußeren Stützkörper (22, 24) an dem Gehäuse (6) befestigt sind.

10. Filterelement nach einem der Ansprüche 1 bis 9,
**dadurch gekennzeichnet,** daß
die Mittelebenen beider Materialbahnen (32) winklig zueinander ausgerichtet sind und dementsprechend die gegebenenfalls vorhandenen inneren Stützkörper eine sich zur Abströmseite hin konisch erweiternde Gestalt aufweisen.

## Claims

1. Filter element, which is to be cleaned off automatically, for a filter casing in which the filter element, through which a flow can pass from the outside to the inside in the cleaning phase, is arranged exchangeably together with a plurality of others, wherein
- the filter element has a filter medium consisting of webs of material pleated in bellows fashion,
- two webs of material pleated in bellows fashion are arranged side by side in such a manner that gaps are formed between them transversely to the longitudinal direction of the webs of material,
- these two webs of material are arranged fast in the top and bottom plastics bodies of the filter element, and
- the lateral longitudinal edges of the two webs of material are joined fast to one another,
characterized in that
- its two webs of material (16, 18, 32) are spaced such a distance apart at their longitudinal fold edges that they cannot lean against one another even in the cleaning phase.

2. Filter element according to Claim 1, characterized in that
- between the two webs of material (16, 28, 32) inner support bodies (44, 48) providing mutual support for both of them are provided,
- the two webs of material (16, 18) lie loose against the inner support bodies (44, 48),
- the inner support bodies are a plate-shaped inner support body (44) and a block-like spacer (48), the block-like spacer being arranged between the inner support body (44) and the top region of the one web of material (18.1).

3. Filter element according to Claim 1 or 2, characterized in that
- on each outer side of the two webs of material (16, 18) an outer support body (22, 24, 52, 54) loosely supporting the web of material from the outside is provided.

4. Filter element according to Claim 2, characterized in that the inner support bodies (44) are permeable to air.

5. Filter element according to Claim 3, characterized in that the outer support bodies (22, 24, 52, 54) which are provided on the outside of a web of material (16, 18) are made in the form of a grid.

6. Filter element according to Claim 5, characterized in that the grid (52, 54) is detachably fastened in a plastics body (14).

7. Filter element according to Claim 3, characterized in that the outer support bodies (22, 24) of both webs of material (16, 18) are made in the form of a basket-like, coherent structure (20).

8. Filter element according to Claim 3, characterized in that the outer support bodies (52, 54) of both webs of material are made in the form of needles surrounding both webs approximately in a U-shape.

9. Filter element according to Claim 3, characterized in that the outer support bodies (22, 24) are fastened to the casing (6).

10. Filter element according to one of Claims 1 to 9, characterized in that the centre planes of the two webs of material (32) are oriented at an angle to one another and accordingly the inner support bodies, if provided, have a shape widening conically towards the flow outlet side.

## Revendications

1. Élément filtrant à nettoyage automatique pour un boîtier de filtre dans lequel l'élément filtrant pouvant être parcouru de l'extérieur vers l'intérieur au cours de la phase de nettoyage est prévu accompagné de plusieurs autres éléments filtrants remplaçables simultanément, sachant que
- l'élément filtrant présente un agent filtrant composé de bandes de matériaux pliées à la manière d'un soufflet,
- deux bandes de matériau pliées à la manière d'un soufflet et disposées côte à côte sont prévues de telle manière qu'entre elles, transversalement par rapport à l'étendue longitudinale des bandes de matériau, sont réalisés des intervalles,
- ces deux bandes de matériau sont disposées fixement dans les corps supérieur et inférieur en matière plastique de l'élément filtrant et
- les arêtes longitudinales latérales des deux bandes de matériau sont reliées fixement l'une à l'autre,
caractérisé en ce que ses deux bandes de matériau (16, 18, 32) sont disposées avec leurs arêtes de pliage longitudinales écartées de telle façon que, même au cours de la phase de nettoyage, elles ne puissent pas se toucher mutuellement.

2. Élément filtrant selon la revendication 1, caractérisé en ce qu'entre les deux bandes de matériau (16, 18, 32) se trouvent les deux corps d'appui intérieurs (44, 48) prenant appui l'un sur l'autre,
- les deux bandes de matériau (16, 18) reposent librement contre les corps d'appui intérieurs (44, 48),
- les corps d'appui intérieurs sont un corps d'appui intérieur (44) en forme de plaque et un écarteur semblable à un bloc (48), sachant qu'entre le corps d'appui intérieur (44) et la partie supérieure de l'une des bandes de matériau (18.1) est disposé l'écarteur semblable à un bloc.

3. Élément filtrant selon la revendication 1 ou 2, caractérisé en ce que sur chaque côté extérieur des deux bandes de matériau (16, 18) est placé un corps d'appui extérieur (22, 24, 52, 54) supportant librement la bande de matériau de l'extérieur.

4. Élément filtrant selon la revendication 2, caractérisé en ce que le corps d'appui intérieur (44) est perméable à l'air.

5. Élément filtrant selon la revendication 3, caractérisé en ce que les corps d'appui extérieurs (22, 24, 52, 54) qui sont placés à l'extérieur sur une bande de matériau (16, 18) sont réalisés sous la forme d'une grille.

6. Élément filtrant selon la revendication 5, caractérisé en ce que la grille (52, 54) est fixée de manière amovible dans un corps en matière plastique (14).

7. Élément filtrant selon la revendication 3, caractérisé en ce que les corps d'appui extérieurs (22, 24) des deux bandes de matériau (16, 18) sont réalisés en tant que figure continue semblable à un panier (20).

8. Élément filtrant selon la revendication 3, caractérisé en ce que les corps d'appui extérieurs (52, 54) des deux bandes de matériau sont réalisés en tant qu'aiguilles entourant les deux bandes approximativement en forme de U.

9. Élément filtrant selon la revendication 3, caractérisé en ce que les corps d'appui extérieurs (22, 24) sont fixés au boîtier (6).

10. Élément filtrant selon l'une des revendications 1 à 9, caractérisé en ce que les plans médians des deux bandes de matériau (32) sont disposés en angle l'un par rapport à l'autre et, en conséquence, les corps d'appui intérieurs qui sont également présents présentent une forme s'élargissant de façon conique vers le côté de l'évacuation.
